# EUROPEAN PATENT SPECIFICATION

(11) **EP 3 771 155 B1**
(45) Date of publication and mention of the grant of the patent: **06.03.2024**
(21) Application number: 19188279.4
(22) Date of filing: 25.07.2019
(51) Int. Cl.: H04L 12/28

(54) **GATEWAY AND METHOD FOR CONNECTING A BUILDING AUTOMATION NETWORK TO THE INTERNET**
GATEWAY UND VERFAHREN ZUR VERBINDUNG EINES GEBÄUDEAUTOMATISIERUNGSNETZWERKS MIT DEM INTERNET
PASSERELLE ET PROCÉDÉ DE CONNEXION D'UN RÉSEAU D'AUTOMATISATION DE BÂTIMENTS À INTERNET

(43) Date of publication of application: 27.01.2021
(73) Proprietor: Siemens Schweiz AG, 8047 Zürich (CH)
(72) Inventor: Gollackner, Thomas, 6315 Oberägeri (CH); Remonato, Michele, 6300 Zug (CH); Soral, Mohit, Pune, Maharashtra, 411 008 (IN)
(74) Representative: Siemens Patent Attorneys

(56) References cited:
- US-A1- 2009 067 441
- US-A1- 2011 277 001
- US-A1- 2018 316 513

## Description

The invention relates to a gateway, a computer implemented method, a computer program and a computer-readable medium for connecting a building automation network to the internet.

Building automation is the automatic centralized control of a building's heating, ventilation and air conditioning, lighting and other systems through a building management system or building automation system (BAS). The objectives of building automation are improved occupant comfort, efficient operation of building systems, reduction in energy consumption and operating costs and improved life cycle of utilities.

For this purpose, intranets which are private networks established with the technologies for local area networks (LANs) and wide area networks (WANs), also called building automation networks, are involved for connecting electronic devices designed to monitor and control the security, fire and flood safety, lighting (especially emergency lighting), heating, ventilation, and air conditioning (HVAC) etc. in a building.

Besides, cloud computing providers also provide various service models via the internet to buildings and/or the above-mentioned electronic devices to e.g. analyze the monitored conditions of the buildings to improve the building automation. For connecting a building automation network to the internet for cloud services, cloud gateways are used to allow data to flow between the building automation networks and the networks of the cloud service providers.

The American patent application US20110277001A1 discloses various embodiments for a gateway device that can execute applications which can communicate with various devices in one or more home networks as well as one or more wide area networks, wherein the gateway device can possess capabilities to communicate over various types of proprietary and/or standardized networks.

Conventionally, the building automation networks and the internet are kept physically separate. However, in some instances, they may be running on the same network. A conventional cloud gateway is designed to support a network configuration with either physically separating the building automation networks with the internet, or having them running on the same network. If a cloud gateway is required to function properly on both of the network configurations, additional physical and/or hardware workarounds such as double Ethernet cables and/or network switches are needed.

This leads to a time-consuming configuration of the corresponding network setup for the cloud gateway. Furthermore, during the commissioning thereof, IT-experts are required to make sure that the whole system is installed, tested, operated, and maintained according to the operational requirements of final users.

Accordingly, it is an object of the present invention to at least overcome the drawbacks of the conventional cloud gateways for a building automation system.

This object is inventively achieved by the independent claims. Advantageous further developments may be taken from the dependent claims.

The invention particularly provides, according to a first aspect, a gateway for connecting a building automation network to the internet. A plurality of electronic devices are provided in the building automation network for monitoring and controlling conditions in a building, in particular security, fire and flood safety, lighting, heating, ventilation, and air conditioning (HVAC). The gateway comprises a local area network interface configured to connect the gateway to the building automation network for communicating with the plurality of electronic devices, a wide area network interface configured to connect the gateway to the internet, a host network unit configured to provide a host network on which at least one local service corresponding to the monitoring and controlling of at least one of the conditions in the building runs, a container network unit configured to provide a container network for at least one remote service, in particular a cloud computing service, provided by an endpoint device or a cloud in the internet to at least one of the electronic devices, a loopback network unit configured to provide a loopback network which interconnects the host network and the container network, and a selection unit configured to select a connecting mode of the gateway from either connecting at least one of the electronic devices via the local area network interface to the internet or connecting the at least one of the electronic devices via the wide area network interface to the internet.

It is particularly advantageous that inventively buildings presenting a variety of different network topologies are supported by the same gateway solution.

In addition, the commissioning of the inventive gateway is possible for a non-IT expert, such as an installer of building products corresponding to the electronic devices for monitoring and controlling conditions in a building. The installer can easily select how the devices in a building automation network are connected to the Internet. Upon selection, the backend application programming interfaces (APIs) automatically apply the corresponding network configuration and settings, without having to involve any additional action from the installer.

All configuration activities run in the backend and are not visible to the installer. The configuration is prompt, thus the time for onsite configuration being reduced compared with the state of the art, and independent of the configurations of existing devices already connected to the gateway. Once the configuration is finished, a restart of the gateway is not required.

Furthermore, with the help of the inventive gateway, the complex network layer, i.e., all the connections between the services and the networks are abstracted. Thereby, a developer of a building product may easily assign to which network a certain local service should connect for operations.

In order to improve the configuration of a building product, a developer may choose to open permitted ports required by a local service for communication with networks.

It is also advantageous that when installing the inventive gateway in a building automation network, the cybersecurity against cyberattacks is ensured because the building automation network is not directly exposed to the Internet. A possible attacker from the Internet cannot reach an electronic device in the building automation network.

Advantageously in the connecting mode the at least one of the electronic devices is connected to the internet via the local area network interface, the host network is connected to the at least one of the electronic devices via the local area network interface, and the container network is connected to the internet via the wide area network interface.

In this connecting mode, the gateway connects to the building automation network and to the internet using separate network interfaces. Thus, the building automation network and the internet are physically separate.

Advantageously in the connecting mode the at least one of the electronic devices is connected to the internet via the wide area network interface, the host network is connected to the at least one of the electronic devices via the wide area network interface, and the container network is connected to the internet via the wide area network interface.

In this connecting mode, the gateway connects to the building automation network and to the internet using a single network interface. Thus, the building automation network and the internet run on the same network.

Advantageously in the connecting mode the at least one of the electronic devices is connected to the internet via the local area network interface, the local service runs on the host network via the local area network interface connecting the at least one of the electronic devices with the host network. Any local service which conventionally communicates over a local area network runs inventively in the host network.

Advantageously in the connecting mode the at least one of the electronic devices is connected to the internet via the wide area network interface, the local service runs on the host network via the wide area network interface connecting the at least one of the electronic devices with the host network. Any local service which conventionally communicates over a local area network runs inventively in the host network.

Advantageously for the remote service, the outgoing data traffic of the container network is routed though the wide area network interface. Thereby, it is ensured that all the cloud service requests are sent to the internet, but not to any of the devices in the building automation network. Any counterfeit service requests from a possible hacker in the internet would not jeopardize the security of the building automation network.

Advantageously for the remote service, the at least one of the electronic devices is connected to the internet via the host network, the loopback network, the container network and the wide area network interface. Thereby, it is possible to simplify the management of all the devices in the building automation network for connecting to the internet.

Advantageously the host network unit is configured to provide the host network in which the plurality of electronic devices are communicated with each other. Thereby, the management of the local communications for local services is simplified.

The invention further particularly provides, according to a second aspect, a computer implemented method for connecting a building automation network to the internet. A plurality of electronic devices are provided in the building automation network for monitoring and controlling conditions in a building, in particular security, fire and flood safety, lighting, heating, ventilation, and air conditioning (HVAC). The method comprises the steps of providing a host network on which at least one local service corresponding to the monitoring and controlling of at least one of the conditions in the building runs, providing a container network for at least one remote service, in particular a cloud computing service, provided by an endpoint device or a cloud in the internet to at least one of the electronic devices, providing a loopback network which interconnects the host network and the container network, providing a local area network interface to connect the plurality of electronic devices to the host network, providing a wide area network interface to connect the container network to the internet, and selecting from either connecting the at least one of the electronic devices via the local area network interface to the internet or connecting the at least one of the electronic devices via the wide area network interface to the internet.

Advantageously the computer implemented method, if connecting the at least one of the electronic devices via the local area network interface to the internet is selected, the host network is connected to the at least one of the electronic devices via the local area network interface, and the container network is connected to the internet via the wide area network interface.

Advantageously the computer implemented method, if connecting the at least one of the electronic devices via the wide area network interface to the internet is selected, the host network is connected to the at least one of the electronic devices via the wide area network interface, and the container network is connected to the internet via the wide area network interface.

Advantageously the computer implemented method, if connecting the at least one of the electronic devices via the local area network interface to the internet is selected, the local service runs on the host network via the local area network interface connecting the at least one of the electronic devices with the host network.

Advantageously the computer implemented method, if connecting the at least one of the electronic devices via the wide area network interface to the internet is selected, the local service runs on the host network via the wide area network interface connecting the at least one of the electronic devices with the host network.

The invention further provides, according to a third aspect, a computer program comprising instructions which, when the program is executed by a computer, cause the computer to carry out the method according to the second aspect.

A Developer of a building automation application needs to write additional code or route configurations for enabling his application to run on the host network of the inventive gateway.

The invention further provides, according to a fourth aspect, a computer-readable medium comprising instructions which, when executed by a computer, cause the computer to carry out the method according to the second aspect.

Further advantageous details and features may be taken from the following description of several exemplary embodiments of the invention in conjunction with the drawings, in which:
Fig. 1a shows schematically an embodiment of the inventive gateway connected to a building automation network and a cloud, the gateway being in one of the connecting modes;
Fig. 1b shows schematically the embodiment of the inventive gateway shown in Fig. 1a, the gateway being in the other connecting mode;
Fig. 2 shows schematically a user interface of another embodiment of the inventive gateway;
Fig. 3 shows a block diagram of an embodiment of the inventive computer implemented method for connecting a building automation network to the internet;
Fig. 4 shows a block diagram of an embodiment of the inventive computer program; and
Fig. 5 shows a block diagram of an embodiment of the inventive computer-readable medium.

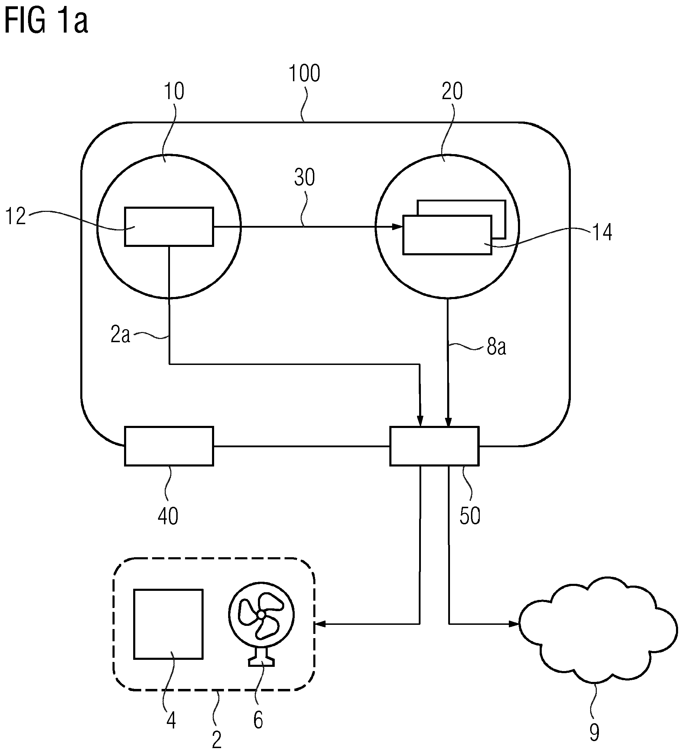

The embodiment of the inventive gateway 100 for connecting a building automation network 2 to the internet shown in Fig. 1a comprises a local area network interface 40 configured to connect the gateway 100 to the building automation network 2 for communicating with two electronic devices 4, 6, a wide area network interface 50 configured to connect the gateway 100 to the internet, a host network unit 10 configured to provide a host network on which at least one local service 12 corresponding to the monitoring and controlling of at least one of the conditions in the building runs, a container network unit 20 configured to provide a container network for at least one cloud computing service 14 provided by a cloud 9 in the internet to the electronic devices 4, 6, a loopback network unit configured to provide a loopback network 30 which interconnects the host network and the container network, and a selection unit configured to select a connecting mode of the gateway 100 from either connecting the electronic devices 4, 6 via the local area network interface 40 to the internet or connecting the electronic devices 4, 6 via the wide area network interface 50 to the internet.

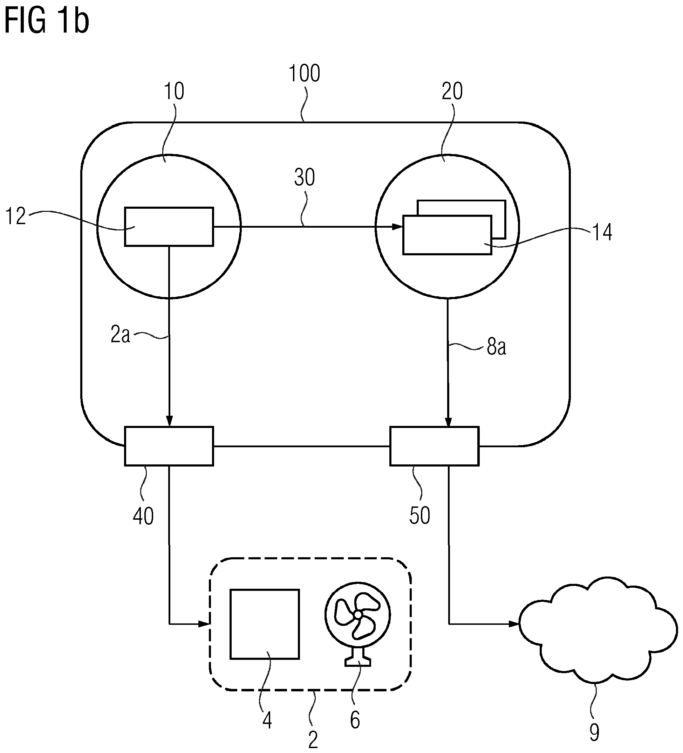

As shown in Fig. 1a, the connecting mode in which the electronic devices 4, 6 are connected to the internet via the wide area network interface 50 is selected. Fig. 1b shows the network topology when the other connecting mode of the gateway 100 is selected in which the electronic devices 4, 6 are connected to the internet via the local area network interface 40. In both of the figures, arrow 2a represents the connection of the host network to the building automation network 2, and arrow 8a represents the connection of the container network to the internet 8.

The software of the gateway 100 is architected to comprise three networks that are interconnected, namely, the container network for cloud connections, the host network for all local services 12 in the building and the loopback network 30 that interconnects the container network and the host network.

These three different networks provide flexibility in the way of connecting local services 12 (using the local area network interface 40 or the wide area network interface 50) to the internet (using the wide area network interface 50), ensuring that cybersecurity is not compromised.

The local service 12 is a domain specific service which requires communicating with devices 4, 6 locally by means of e.g. the BACnet or Modbus protocol. The cloud (computing) service 14 is a service responsible to securely communicate with a cloud endpoint. The local area network interface 40 is a physical interface to connect to the building automation network 2 for communicating with physical devices 4, 6. The wide area network interface 50 is a physical interface to connect to the internet network for communicating with the internet 8.

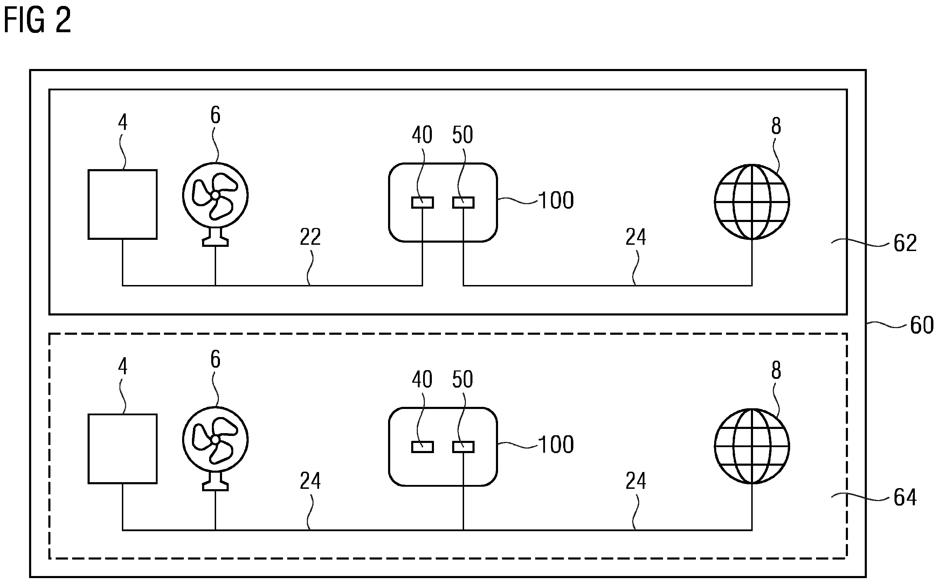

Fig. 2 shows a user interface 60 of another embodiment of the inventive gateway 100 for commissioning. In the user interface 60, a separate network mode 62 and a single network mode 64 are provided for selection. In the separate network mode 62, the gateway 100 connects to the building automation network 2, i.e. to the devices 4, 6, and to the internet 8 using separate network interfaces, i.e., the local area network interface 40 (over a local area network 22) _and the wide area network interface 50 (over a wide area network 24) . In the single network mode 64, the gateway 100 connects to the building automation network 2, i.e. to the devices 4, 6, and to the internet 8 using a single network interface, i.e., the wide area network interface 50 (over a wide area network 24). In the user interface 60 shown in Fig. 2, the separate network mode 62 has been selected.

In an embodiment of the gateway not shown, in the separate network mode 62, a 4G or 3G dongle which is basically a small modem with the ability to connect to the 4G or 3G wireless network is provided to replace the wide area network interface 50.

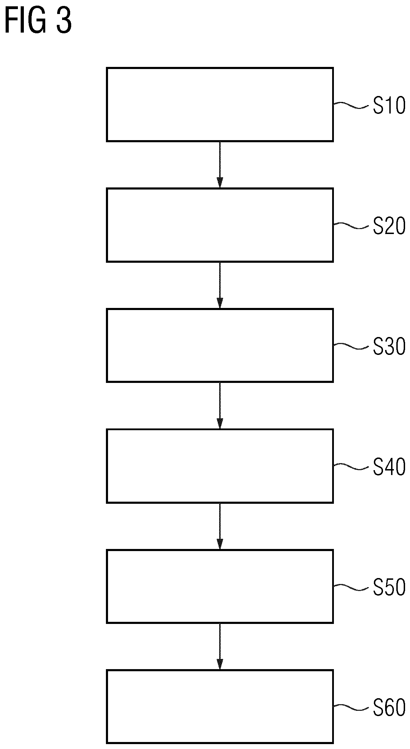

The embodiment of the inventive computer implemented method for connecting a building automation network to the internet shown in Fig. 3 comprises six steps S10, S20, S30, S40, S50, S60.

In step S10, a host network is provided on which at least one local service corresponding to the monitoring and controlling of at least one of the conditions in the building runs. In step S20, a container network is provided for at least one remote service, in particular a cloud computing service, provided by an endpoint device or a cloud in the internet to at least one of the electronic devices. In step S30, a loopback network which interconnects the host network and the container network is provided. In step S40, a local area network interface is provided to connect the plurality of electronic devices to the host network. In step S50, a wide area network interface is provided to connect the container network to the internet. In step S60, a connecting mode or network mode is selected from either connecting the at least one of the electronic devices via the local area network interface to the internet or connecting the at least one of the electronic devices via the wide area network interface to the internet.

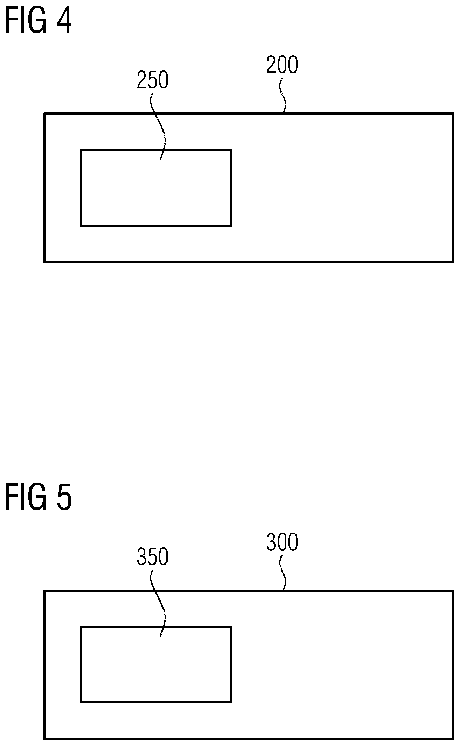

The embodiment of the inventive computer program 200 shown in Fig. 4 comprises instructions 250 which, when the program 200 is executed by a computer, cause the computer to carry out the embodiment of the inventive method shown in Fig. 3.

The embodiment of the inventive computer-readable medium 300 shown in Fig. 5 comprises instructions 350 which, when executed by a computer, cause the computer to carry out the embodiment of the inventive method shown in Fig. 3.

In an embodiment, and for each building, more than one gateway may be employed, each for connecting a building automation network to the internet.

## Claims

1. A gateway (100) for connecting a building automation network (2) to the internet (8), wherein a plurality of electronic devices (4, 6) are provided in the building automation network (2) for monitoring and controlling conditions in a building, in particular security, fire and flood safety, lighting, heating, ventilation, and air conditioning, HVAC, the gateway (100) comprising
a local area network interface (40) configured to connect the gateway (100) to the building automation network (2) for communicating with the plurality of electronic devices (4, 6), a wide area network interface (50) configured to connect the gateway (100) to the internet (8),
a host network unit (10) configured to provide a host network on which at least one local service (12) corresponding to the monitoring and controlling of at least one of the conditions in the building runs,
a container network unit (20) configured to provide a container network for at least one remote service (14), in particular a cloud computing service (14), provided by an endpoint device or a cloud (9) in the internet (8) to at least one of the electronic devices (4, 6),
a loopback network unit configured to provide a loopback network (30) which interconnects the host network and the container network, and
a selection unit configured to select a connecting mode of the gateway (100) from connecting at least one of the electronic devices (4, 6) via the local area network interface (40) to the internet (8) which corresponds to a separate network mode (64), or from connecting the at least one of the electronic devices (4, 6) via the wide area network interface (50) to the internet (8) which corresponds to a single network mode (64),
wherein in the connecting mode the at least one of the electronic devices (4, 6) is connected to the internet (8) via the local area network interface (40), the host network is connected to the at least one of the electronic devices (4, 6) via the local area network interface (40), and the container network is connected to the internet (8) via the wide area network interface (50),
wherein in the connecting mode the at least one of the electronic devices (4, 6) is connected to the internet (8) via the wide area network interface (50), the host network is connected to the at least one of the electronic devices (4, 6) via the wide area network interface (50), and the container network is connected to the internet (8) via the wide area network interface (50),
wherein the gateway (100) further comprises a user interface (60) for commissioning, wherein in the user interface (60), the separate network mode (62) and the single network mode (64) are provided for selection,
wherein upon selection, backend Application Programming Interfaces, APIs, automatically apply the corresponding network configuration and settings, without having to involve any additional action from a user,
wherein in the connecting mode that the at least one of the electronic devices (4, 6) is connected to the internet (8) via the local area network interface (40), the local service (12) runs on the host network via the local area network interface (40) connecting the at least one of the electronic devices (4, 6) with the host network, and
wherein in the connecting mode that the at least one of the electronic devices (4, 6) is connected to the internet (8) via the wide area network interface (50), the local service (12) runs on the host network via the wide area network interface (50) connecting the at least one of the electronic devices (4, 6) with the host network.

2. The gateway (100) according to claim 1, wherein for the remote service (14), the outgoing data traffic of the container network is routed though the wide area network interface (50).

3. The gateway (100) according to any of the preceding claims, wherein for the remote service (14), the at least one of the electronic devices (4, 6) is connected to the internet (8) via the host network, the loopback network (30), the container network and the wide area network interface (50).

4. The gateway (100) according to any of the preceding claims, wherein the host network unit (10) is configured to provide the host network in which the plurality of electronic devices (4, 6) are communicated with each other.

5. A computer implemented method performed by a gateway (100) for connecting a building automation network (2) to the internet (8), wherein a plurality of electronic devices (4, 6) are provided in the building automation network (2) for monitoring and controlling conditions in a building, in particular security, fire and flood safety, lighting, heating, ventilation, and air conditioning, HVAC, the method comprising the steps of:
providing (S10) a host network on which at least one local service (12) corresponding to the monitoring and controlling of at least one of the conditions in the building runs,
providing (S20) a container network for at least one remote service (14), in particular a cloud computing service (14),
provided by an endpoint device or a cloud (9) in the internet (8) to at least one of the electronic devices (4, 6),
providing (S30) a loopback network (30) which interconnects the host network and the container network,
providing (S40) a local area network interface (40) to connect the plurality of electronic devices (4, 6) to the host network,
providing (S50) a wide area network interface (50) to connect the container network to the internet (8), and
selecting (S60) from connecting the at least one of the electronic devices (4, 6) via the local area network interface (40) to the internet (8) which corresponds to a separate network mode (64), or from connecting the at least one of the electronic devices (4, 6) via the wide area network interface (50) to the internet (8) which corresponds to a single network mode (64),
wherein if connecting the at least one of the electronic devices (4, 6) via the local area network interface (40) to the internet (8) is selected, the host network is connected to the at least one of the electronic devices (4, 6) via the local area network interface (40), and the container network is connected to the internet (8) via the wide area network interface (50),
wherein if connecting the at least one of the electronic devices (4, 6) via the wide area network interface (50) to the internet (8) is selected, the host network is connected to the at least one of the electronic devices (4, 6) via the wide area network interface (50), and the container network is connected to the internet (8) via the wide area network interface (50), and
providing a user interface (60) for commissioning, wherein in the user interface (60) the separate network mode (62) and the single network mode (64) are provided for selection,
wherein upon selection, backend Application Programming Interfaces, APIs, automatically apply the corresponding network configuration and settings, without having to involve any additional action from a user,
wherein if connecting the at least one of the electronic devices (4, 6) via the local area network interface (40) to the internet (8) is selected, the local service (12) runs on the host network via the local area network interface (40) connecting the at least one of the electronic devices (4, 6) with the host network, and
wherein if connecting the at least one of the electronic devices (4, 6) via the wide area network interface (50) to the internet (8) is selected, the local service (12) runs on the host network via the wide area network interface (50) connecting the at least one of the electronic devices (4, 6) with the host network.

6. A computer program (200) comprising instructions (250) which, when the program is executed by a computer, cause the computer to carry out the method of claim 5.

7. A computer-readable medium (300) comprising instructions (350) which, when executed by a computer, cause the computer to carry out the method of claim 5.

## Patentansprüche

1. Gateway (100) zum Verbinden eines Gebäudeautomationsnetzwerks (2) mit dem Internet (8), wobei in dem Gebäudeautomationsnetzwerk (2) mehrere elektronische Geräte (4, 6) zum Überwachen und Regeln von Bedingungen in einem Gebäude, insbesondere Sicherheit, Brand- und Hochwasserschutz, Beleuchtung, Heizung, Lüftung und Klimatisierung (HLK) vorgesehen sind, wobei das Gateway (100) Folgendes umfasst:
eine Schnittstelle (40) zu einem lokalen Netz, die so konfiguriert ist, dass sie das Gateway (100) für die Kommunikation mit den mehreren elektronischen Geräten (4, 6) mit dem Gebäudeautomationsnetzwerk (2) verbindet,
eine Schnittstelle (50) zu einem Weitverkehrsnetz, die so konfiguriert ist, dass sie das Gateway (100) mit dem Internet (8) verbindet,
eine Host-Netzwerkeinheit (10), die so konfiguriert ist, dass sie ein Host-Netzwerk bereitstellt, in dem mindestens ein lokaler Dienst (12) ausgeführt wird, der dem Überwachen und Regeln mindestens einer der Bedingungen im Gebäude entspricht, eine Containernetzwerkeinheit (20), die so konfiguriert ist, dass sie für mindestens einen von einem Endpunktgerät oder einer Cloud (9) im Internet (8) für mindestens eines der elektronischen Geräte (4, 6) bereitgestellten Ferndienst (14), insbesondere einen Cloud-Computing-Dienst (14), ein Containernetzwerk bereitstellt,
eine Loopback-Netzwerkeinheit, die so konfiguriert ist, dass sie ein Loopback-Netzwerk (30) bereitstellt, welches das Host-Netzwerk und das Containernetzwerk miteinander verbindet, und eine Auswahleinheit, die so konfiguriert ist, dass sie unter einem Verbinden mindestens eines der elektronischen Geräte (4, 6) über die Schnittstelle (40) zu einem lokalen Netz mit dem Internet (8), was einem Modus (64) mit separaten Netzwerken entspricht, und einem Verbinden des mindestens einen der elektronischen Geräte (4, 6) über die Schnittstelle (50) zu einem Weitverkehrsnetz mit dem Internet (8), was einem Modus (64) mit nur einem Netzwerk entspricht, einen Verbindungsmodus des Gateway (100) auswählt,
wobei das mindestens eine der elektronischen Geräte (4, 6) bei dem Verbindungsmodus über die Schnittstelle (40) zu einem lokalen Netz mit dem Internet (8), das Host-Netzwerk über die Schnittstelle (40) zu einem lokalen Netz mit dem mindestens einen der elektronischen Geräte (4, 6) und das Containernetzwerk über die Schnittstelle (50) zu einem Weitverkehrsnetz mit dem Internet (8) verbunden ist,
wobei das mindestens eine der elektronischen Geräte (4, 6) bei dem Verbindungsmodus über die Schnittstelle (50) zu einem Weitverkehrsnetz mit dem Internet (8), das Host-Netzwerk über die Schnittstelle (50) zu einem Weitverkehrsnetz mit dem mindestens einen der elektronischen Geräte (4, 6) und das Containernetzwerk über die Schnittstelle (50) zu einem Weitverkehrsnetz mit dem Internet (8) verbunden ist,
wobei das Gateway (100) ferner eine Benutzerschnittstelle (60) für die Inbetriebnahme umfasst, wobei der Modus (62) mit separaten Netzwerken und der Modus (64) mit nur einem Netzwerk auf der Benutzerschnittstelle (60) zur Auswahl stehen,
wobei nach dem Auswählen Backend-Anwendungsprogrammierschnittstellen (API) automatisch die entsprechende Netzwerkkonfiguration und entsprechende Einstellungen anwenden, ohne dass ein Benutzer zusätzliche Maßnahmen ergreifen muss,
wobei bei dem Verbindungsmodus, in dem das mindestens eine der elektronischen Geräte (4, 6) über die Schnittstelle (40) zu einem lokalen Netz mit dem Internet (8) verbunden ist, der lokale Dienst (12) über die Schnittstelle (40) zu einem lokalen Netz, die das mindestens eine der elektronischen Geräte (4, 6) mit dem Host-Netzwerk verbindet, in dem Host-Netzwerk ausgeführt wird, und
wobei bei dem Verbindungsmodus, in dem das mindestens eine der elektronischen Geräte (4, 6) über die Schnittstelle (50) zu einem Weitverkehrsnetz mit dem Internet (8) verbunden ist, der lokale Dienst (12) über die Schnittstelle (50) zu einem Weitverkehrsnetz, die das mindestens eine der elektronischen Geräte (4, 6) mit dem Host-Netzwerk verbindet, in dem Host-Netzwerk ausgeführt wird.

2. Gateway (100) nach Anspruch 1, wobei der abgehende Datenverkehr des Containernetzwerks für den Ferndienst (14) über die Schnittstelle (50) zu einem Weitverkehrsnetz geleitet wird.

3. Gateway (100) nach einem der vorhergehenden Ansprüche, wobei bei dem Ferndienst (14) das mindestens eine der elektronischen Geräte (4, 6) über das Host-Netzwerk, das Loopback-Netzwerk (30), das Containernetzwerk und die Schnittstelle (50) zu einem Weitverkehrsnetz mit dem Internet (8) verbunden ist.

4. Gateway (100) nach einem der vorhergehenden Ansprüche, wobei die Host-Netzwerkeinheit (10) so konfiguriert ist, dass sie das Host-Netzwerk bereitstellt, in dem die mehreren elektronischen Geräte (4, 6) miteinander Daten austauschen.

5. Computer implementiertes Verfahren, das von einem Gateway (100) zum Verbinden eines Gebäudeautomationsnetzwerks (2) mit dem Internet (8) ausgeführt wird, wobei in dem Gebäudeautomationsnetzwerk (2) mehrere elektronische Geräte (4, 6) zum Überwachen und Regeln von Bedingungen in einem Gebäude, insbesondere Sicherheit, Brand- und Hochwasserschutz, Beleuchtung, Heizung, Lüftung und Klimatisierung (HLK) vorgesehen sind, wobei das Verfahren folgende Schritte umfasst:
Bereitstellen (S10) eines Host-Netzwerks, in dem mindestens ein lokaler Dienst (12) ausgeführt wird, der dem Überwachen und Regeln mindestens einer der Bedingungen im Gebäude entspricht,
Bereitstellen (S20) eines Containernetzwerks für mindestens einen von einem Endpunktgerät oder einer Cloud (9) im Internet (8) für mindestens eines der elektronischen Geräte (4, 6) bereitgestellten Ferndienst (14), insbesondere einen Cloud-Computing-Dienst (14),
Bereitstellen (S30) eines Loopback-Netzwerks (30), welches das Host-Netzwerk und das Containernetzwerk miteinander verbindet, Bereitstellen (S40) einer Schnittstelle (40) zu einem lokalen Netz, die die mehreren elektronischen Geräte (4, 6) mit dem Host-Netzwerk verbindet,
Bereitstellen (S50) einer Schnittstelle (50) zu einem Weitverkehrsnetz, die das Containernetzwerk mit dem Internet (8) verbindet, und
Auswählen (S60) unter einem Verbinden des mindestens einen der elektronischen Geräte (4, 6) über die Schnittstelle (40) zu einem lokalen Netz mit dem Internet (8), was einem Modus (64) mit separaten Netzwerken entspricht, und einem Verbinden des mindestens einen der elektronischen Geräte (4, 6) über die Schnittstelle (50) zu einem Weitverkehrsnetz mit dem Internet (8), was einem Modus (64) mit nur einem Netzwerk entspricht,
wobei, wenn das Verbinden des mindestens einen der elektronischen Geräte (4, 6) mit dem Internet (8) über die Schnittstelle (40) zu einem lokalen Netzausgewählt wird, das Host-Netzwerk über die Schnittstelle (40) zu einem lokalen Netz mit dem mindestens einen der elektronischen Geräte (4, 6) und das Containernetzwerk über die Schnittstelle (50) zu einem Weitverkehrsnetz mit dem Internet (8) verbunden wird,
wobei, wenn das Verbinden des mindestens einen der elektronischen Geräte (4, 6) mit dem Internet (8) über die Schnittstelle (50) zu einem Weitverkehrsnetz ausgewählt wird, das Host-Netzwerk über die Schnittstelle (50) zu einem Weitverkehrsnetz mit dem mindestens einen der elektronischen Geräte (4, 6) und das Containernetzwerk über die Schnittstelle (50) zu einem Weitverkehrsnetz mit dem Internet (8) verbunden wird, und
Bereitstellen einer Benutzerschnittstelle (60) für die Inbetriebnahme, wobei der Modus (62) mit separaten Netzwerken und der Modus (64) mit nur einem Netzwerk auf der Benutzerschnittstelle (60) zur Auswahl stehen,
wobei nach dem Auswählen Backend-Anwendungsprogrammierschnittstellen (API) automatisch die entsprechende Netzwerkkonfiguration und entsprechende Einstellungen anwenden, ohne dass ein Benutzer zusätzliche Maßnahmen ergreifen muss,
wobei, wenn das Verbinden des mindestens einen der elektronischen Geräte (4, 6) mit dem Internet (8) über die Schnittstelle (40) zu einem lokalen Netz ausgewählt wird, der lokale Dienst (12) über die Schnittstelle (40) zu einem lokalen Netz, die das mindestens eine der elektronischen Geräte (4, 6) mit dem Host-Netzwerk verbindet, im Host-Netzwerk ausgeführt wird, und
wobei, wenn das Verbinden des mindestens einen der elektronischen Geräte (4, 6) mit dem Internet (8) über die Schnittstelle (50) zu einem Weitverkehrsnetz ausgewählt wird, der lokale Dienst (12) über die Schnittstelle (50) zu einem Weitverkehrsnetz, die das mindestens eine der elektronischen Geräte (4, 6) mit dem Host-Netzwerk verbindet, im Host-Netzwerk ausgeführt wird.

6. Computerprogramm (200) mit Anweisungen (250), welche, wenn das Programm von einem Computer ausgeführt wird, diesen dazu veranlassen, das Verfahren nach Anspruch 5 durchzuführen.

7. Computerlesbares Medium (300), das Anweisungen (350) umfasst, welche, wenn sie von einem Computer ausgeführt werden, diesen dazu veranlassen, das Verfahren nach Anspruch 5 durchzuführen.

## Revendications

1. Passerelle (100) pour connecter un réseau d'automatisation de bâtiments (2) à Internet (8), dans lequel une pluralité de dispositifs électroniques (4, 6) sont prévus dans le réseau d'automatisation de bâtiments (2) pour surveiller et commander les conditions dans un bâtiment, plus particulièrement la sécurité, la protection contre les incendies et les inondations, l'éclairage, le chauffage, la ventilation, et la climatisation, HVAC, la passerelle (100) comprenant
une interface réseau de zone locale (40) configurée pour connecter la passerelle (100) au réseau d'automatisation de bâtiments (2) pour communiquer avec la pluralité de dispositifs électroniques (4, 6),
une interface réseau de zone étendue (50) configurée pour connecter la passerelle (100) à Internet (8),
une unité de réseau hôte (10) configurée pour fournir un réseau hôte sur lequel au moins un service local (12) correspondant à la surveillance et à la commande d'au moins une des conditions dans le bâtiment fonctionne,
une unité de réseau de conteneurs (20) configurée pour fournir un réseau de conteneurs pour au moins un service à distance (14), plus particulièrement un service d'informatique en nuage (14), fourni par un service de point final ou un nuage (9) sur Internet (8) à l'un au moins des dispositifs électroniques (4, 6),
une unité de réseau de bouclage configurée pour fournir un réseau de bouclage (30) qui interconnecte le réseau hôte et le réseau de conteneurs, et
une unité de sélection configurée pour sélectionner un mode de connexion de la passerelle (100) à partir de la connexion de l'un au moins des dispositifs électroniques (4, 6) via l'interface réseau de zone locale (40) à Internet (8) qui correspond à un mode de réseau distinct (64), ou à partir de la connexion de l'un au moins des dispositifs électroniques (4, 6) via l'interface réseau de zone étendue (50) à Internet (8) qui correspond à un mode de réseau unique (64),
dans lequel dans le mode de connexion, l'un au moins des dispositifs électroniques (4, 6) est connecté à Internet (8) via l'interface réseau de zone locale (40), le réseau hôte est connecté à l'un au moins des dispositifs électroniques (4, 6) via l'interface réseau de zone locale (40), et le réseau de conteneurs est connecté à Internet (8) via l'interface réseau de zone étendue (50),
dans lequel dans le mode de connexion, l'un au moins des dispositifs électroniques (4, 6) est connecté à Internet (8) via l'interface réseau de zone étendue (50), le réseau hôte est connecté à l'un au moins des dispositifs électroniques (4, 6) via l'interface réseau de zone étendue (50), et le réseau de conteneurs est connecté à Internet (8) via l'interface réseau de zone étendue (50),
dans lequel la passerelle (100) comprend, en outre, une interface utilisateur (60) pour la mise en service, dans lequel dans l'interface utilisateur (60), le mode réseau distinct (62) et le mode réseau unique (64) sont prévus pour la sélection,
dans lequel, lors de la sélection, les Interfaces de programmation d'application d'arrière-plan, API, appliquent automatiquement la configuration et les réglages réseau correspondants, sans avoir à nécessiter une quelconque action supplémentaire d'un utilisateur,
dans lequel, dans le mode de connexion, l'un au moins des dispositifs électroniques (4, 6) est connecté à Internet (8) via l'interface réseau de zone locale (40), le service local (12) fonctionne sur le réseau hôte via l'interface réseau de zone locale (40) connectant l'un au moins des dispositifs électroniques (4, 6) au réseau hôte, et
dans lequel, dans le mode de connexion, l'un au moins des dispositifs électroniques (4, 6) est connecté à Internet (8) via l'interface réseau de zone étendue (50), le service local (12) fonctionne sur le réseau hôte via l'interface réseau de zone étendue (50) connectant l'un au moins des dispositifs électroniques (4, 6) au réseau hôte.

2. Passerelle (100) selon la revendication 1, dans laquelle pour le service à distance (14), le trafic de données sortantes du réseau de conteneurs est acheminé par le biais de l'interface réseau de zone étendue (50).

3. Passerelle (100) selon l'une quelconque des revendications précédentes, dans laquelle pour le service à distance (14), l'un au moins des dispositifs électroniques (4, 6) est connecté à Internet (8) via le réseau hôte, le réseau de bouclage (30), le réseau de conteneurs et l'interface réseau de zone étendue (50).

4. Passerelle (100) selon l'une quelconque des revendications précédentes, dans laquelle l'unité de réseau hôte (10) est configurée pour fournir le réseau hôte dans lequel la pluralité de dispositifs électroniques (4, 6) sont en communication les uns avec les autres.

5. Procédé mis en œuvre par ordinateur exécuté par une passerelle (100) pour connecter un réseau d'automatisation de bâtiments (2) à Internet (8), dans lequel une pluralité de dispositifs électroniques (4, 6) sont prévus dans le réseau d'automatisation de bâtiments (2) pour surveiller et commander les conditions dans un bâtiment, plus particulièrement la sécurité, la protection contre les incendies et les inondations, l'éclairage, le chauffage, la ventilation, et la climatisation, HVAC, le procédé comprenant les étapes de :
fourniture (S10) d'un réseau hôte sur lequel au moins un service local (12) correspondant à la surveillance et à la commande d'au moins une des conditions dans le bâtiment fonctionne,
fourniture (S20) d'un réseau de conteneurs pour au moins un service à distance (14), plus particulièrement un service d'informatique en nuage (14), fourni par un service de point final ou un nuage (9) sur Internet (8) à l'un au moins des dispositifs électroniques (4, 6),
fourniture (S30) d'un réseau de bouclage (30) qui interconnecte le réseau hôte et le réseau de conteneurs,
fourniture (S40) d'une interface réseau de zone locale (40) pour connecter la pluralité de dispositifs électroniques (4, 6) au réseau hôte,
fourniture (S50) d'une interface réseau de zone étendue (50) pour connecter le réseau de conteneurs à Internet (8), et sélection (S60) à partir de la connexion de l'un au moins des dispositifs électroniques (4, 6) via l'interface réseau de zone locale (40) à Internet (8) qui correspond à un mode de réseau distinct (64), ou à partir de la connexion de l'un au moins des dispositifs électroniques (4, 6) via l'interface réseau de zone étendue (50) à Internet (8) qui correspond à un mode de réseau unique (64),
dans lequel si la connexion de l'un au moins des dispositifs électroniques (4, 6) via l'interface réseau de zone locale (40) à Internet (8) est sélectionnée, le réseau hôte est connecté à l'un au moins des dispositifs électroniques (4, 6) via l'interface réseau de zone locale (40), et le réseau de conteneurs est connecté à Internet (8) via l'interface réseau de zone étendue (50),
dans lequel si la connexion de l'un au moins des dispositifs électroniques (4, 6) via l'interface réseau de zone étendue (50) à Internet (8) est sélectionnée, le réseau hôte est connecté à l'un au moins des dispositifs électroniques (4, 6) via l'interface réseau de zone étendue (50), et le réseau de conteneurs est connecté à Internet (8) via l'interface réseau de zone étendue (50), et
fourniture d'une interface utilisateur (60) pour la mise en service, dans lequel dans l'interface utilisateur (60), le mode réseau distinct (62) et le mode réseau unique (64) sont prévus pour la sélection,
dans lequel, lors de la sélection, les Interfaces de programmation d'application d'arrière-plan, API, appliquent automatiquement la configuration et les réglages réseau correspondants, sans avoir à nécessiter une quelconque action supplémentaire d'un utilisateur,
dans lequel si la connexion de l'un au moins des dispositifs électroniques (4, 6) via l'interface réseau de zone locale (40) à Internet (8) est sélectionnée, le service local (12) fonctionne sur le réseau hôte via l'interface réseau de zone locale (40) connectant l'un au moins des dispositifs électroniques (4, 6) au réseau hôte, et
dans lequel si la connexion de l'un au moins des dispositifs électroniques (4, 6) via l'interface réseau de zone étendue (50) à Internet (8) est sélectionnée, le service local (12) fonctionne sur le réseau hôte via l'interface réseau de zone étendue (50) connectant l'un au moins des dispositifs électroniques (4, 6) au réseau hôte.

6. Programme informatique (200) comprenant des instructions (250) qui, lorsque le programme est exécuté par un ordinateur, entraînent l'ordinateur à exécuter le procédé selon la revendication 5.

7. Support lisible par ordinateur (300) comprenant des instructions (350) qui, lorsqu'elles sont exécutées par un ordinateur, entraînent l'ordinateur à exécuter le procédé selon la revendication 5.
